# EUROPÄISCHE PATENTANMELDUNG

(11) **EP 3 404 810 A1**
(43) Veröffentlichungstag der Anmeldung: **21.11.2018**
(21) Anmeldenummer: 17171706.9
(22) Anmeldetag: 18.05.2017
(51) Int. Cl.: H02K 11/20, H02K 11/35, H02K 11/25, G01K 1/02, G01K 7/42, G05B 19/418

(54) **VERFAHREN ZUM ÜBERWACHEN DES BETRIEBES EINER ELEKTRISCHEN ROTIERENDEN MASCHINE**

(71) Anmelder: Siemens Aktiengesellschaft, 80333 München (DE)
(72) Erfinder: Sewiolo, Benjamin, 90587 Obermichelbach (DE)

(57) **Zusammenfassung**

Die Erfindung betrifft ein Verfahren zum Überwachen des Betriebes einer elektrischen rotierenden Maschine (2) mit einem Rotor (8), einem Stator (10) und einem Maschinengehäuse (26), in dem der Rotor (8) und der Stator (10) aufgenommen sind. Um ohne konstruktive Änderungen, im Vergleich zum Stand der Technik, eine höhere Zuverlässigkeit zu erreichen, wird vorgeschlagen, dass auf einer äußeren Oberfläche des Maschinengehäuses (26) zumindest eine äußere Temperatur (Tal, Ta2, Ta3, Ta4) an zumindest einer bekannten Position erfasst wird, wobei aus der erfassten äußeren Temperatur (Tal, Ta2, Ta3, Ta4) mittels eines in einer Cloud (38) bereitgestellten Temperaturmodells (40) zumindest eine innere Temperatur (Til, Ti2, Ti3) ermittelt wird.

## Beschreibung

Die Erfindung betrifft ein Verfahren zum Überwachen des Betriebes einer elektrischen rotierenden Maschine mit einem Rotor, einem Stator und einem Maschinengehäuse, in dem der Rotor und der Stator aufgenommen sind.

Die Erfindung betrifft darüber hinaus eine Überwachungsvorrichtung mit mindestens einer Sensorvorrichtung und einer Recheneinheit in einer Zentraleinheit zur Durchführung eines derartigen Verfahrens.

Ferner betrifft die Erfindung ein Computerprogramm zur Durchführung eines derartigen Verfahrens.

Überdies betrifft die Erfindung ein Computerprogrammprodukt mit einem derartigen Computerprogramm.

Die Erfindung betrifft des Weiteren eine elektrische rotierende Maschine mit einem Rotor, einem Stator und einem Maschinengehäuse, in dem der Rotor und der Stator aufgenommen sind.

Ein derartiges Verfahren zum Überwachen des Betriebes einer elektrischen rotierenden Maschine, insbesondere eines Motors oder eines Generators, wird beispielsweise in einem industriellen Umfeld mit zahlreichen automatisierten Prozessen eingesetzt, um Wartungsintervalle zu koordinieren oder bei Bedarf frühzeitig Gegenmaßnahmen einzuleiten. Das Überwachungsverfahren soll ohne konstruktive Änderungen an der elektrischen rotierenden Maschine durchführbar sein, um den eigentlichen Betrieb nicht zu beeinflussen und beispielsweise eine Überwachungsvorrichtung nachrüsten zu können.

Mit Hilfe einer Überwachungsvorrichtung werden physikalische Größen der Maschine, beispielsweise ein Magnetfeld, eine Vibration und/oder eine Temperatur messtechnisch erfasst. Die Möglichkeiten, physikalische Größen der elektrischen rotierenden Maschine innerhalb der Überwachungsvorrichtung nichtinvasiv zu messen, sind beschränkt. Problematisch ist beispielsweise eine Temperaturmessung an den Wickelköpfen. Bisher sind hierfür Temperatursensoren verdrahtet in der elektrischen rotierenden Maschine angeordnet.

Die Offenlegungsschrift US 2016/0209831 A1 beschreibt ein IoT-basiertes System zur überwachenden Fertigungskontrolle und prädiktiven Wartung einer Maschine oder eines Maschinennetzwerks unter Einsatz von auf der Maschine angeordneten Sensoren. Das System umfasst eine Vielzahl von IR-Temperatursensoren, die an der Außenseite der Maschine befestigt werden. Jeder IR-Sensor ist dafür geeignet, die erfassten Temperaturwerte drahtlos über ein Kommunikationsnetzwerk zu übertragen, eine Auswerteeinheit ist dafür geeignet, die Daten von den IR-Sensoren zu empfangen und die empfangenen Daten weiterzuverarbeiten, um Temperaturverteilungen, Abweichungen usw. festzustellen.

Das chinesische Gebrauchsmuster CN 205 992 042 U beschreibt eine Überwachungsvorrichtung eines Motors mit mehreren Sensoren. Es werden mit zumindest einer Messvorrichtung zur Messung einer magnetischen Feldstärke eine erste magnetische Feldstärke entlang einer im Wesentlichen parallel zur Motorachse verlaufenden ersten Achse und eine zweite magnetische Feldstärke entlang einer zweiten Achse gemessen. Außerdem werden mit zumindest einem Vibrationssensor eine erste Vibration entlang der ersten Achse und eine zweite Vibration entlang der zweiten Achse gemessen. Ferner werden ein Temperatursensor zur Messung einer Temperatur in einem am Motor angrenzenden Bereich und ein akustischer Sensor zur Messung eines akustischen Signals um den Motor herum verwendet.

Der Erfindung liegt die Aufgabe zugrunde, ein Verfahren zum Überwachen des Betriebes einer elektrischen rotierenden Maschine anzugeben, dessen Durchführung ohne konstruktive Änderungen an der elektrischen rotierenden Maschine möglich ist und im Vergleich zum Stand der Technik zuverlässiger ist.

Die Aufgabe wird erfindungsgemäß durch ein Verfahren zum Überwachen des Betriebes einer elektrischen rotierenden Maschine mit einem Rotor, einem Stator und einem Maschinengehäuse, in dem der Rotor und der Stator aufgenommen sind, gelöst, wobei auf einer äußeren Oberfläche des Maschinengehäuses zumindest eine äußere Temperatur an zumindest einer bekannten Position erfasst wird, wobei aus der erfassten äußeren Temperatur mittels eines in einer Cloud bereitgestellten Temperaturmodells zumindest eine innere Temperatur ermittelt wird.

Darüber hinaus wird die Aufgabe erfindungsgemäß durch eine Überwachungsvorrichtung mit mindestens einer Sensorvorrichtung und einer Recheneinheit in einer Zentraleinheit zur Durchführung eines derartigen Verfahrens gelöst.

Ferner wird die Aufgabe erfindungsgemäß durch ein Computerprogramm zur Durchführung eines derartigen Verfahrens bei Ablauf in einer Recheneinheit einer derartigen Überwachungsvorrichtung gelöst.

Überdies wird die Aufgabe erfindungsgemäß durch ein Computerprogrammprodukt mit einem derartigen Computerprogramm gelöst.

Des Weiteren wird die Aufgabe erfindungsgemäß durch eine elektrische rotierende Maschine mit einem Rotor, einem Stator und einem Maschinengehäuse, in dem der Rotor und der Stator aufgenommen sind, gelöst, wobei auf einer äußeren Oberfläche des Maschinengehäuses Mittel zur Erfassung zumindest einer äußeren Temperatur an zumindest einer bekannten Position angeordnet sind, wobei die elektrische rotierende Maschine Mittel zur Ermittlung zumindest einer inneren Temperatur aus der äußeren Temperatur mit Hilfe eines in einer Cloud bereitgestellten Temperaturmodells aufweist.

Die in Bezug auf das Verfahren nachstehend angeführten Vorteile und bevorzugten Ausgestaltungen lassen sich sinngemäß auf die Überwachungsvorrichtung, das Computerprogramm, das Computerprogrammprodukt und die elektrische rotierende Maschine übertragen.

Der Erfindung liegt die Überlegung zugrunde, aus auf einem Maschinengehäuse einer elektrischen rotierenden Maschine gemessenen äußeren Temperaturmesswerten auf Temperaturwerte im Innenraum des Gehäuses, beispielsweise an den Wickelköpfen, zu schließen, ohne konstruktive Änderungen an der Maschine selbst vorzunehmen. Die verwendeten Mittel zur Erfassung einer äußeren Temperatur sind beispielsweise Temperatursensoren. Zur Ermittlung der Temperaturwerte im Inneneren des Gehäuses wird in einer Cloud ein leistungsfähiges Temperaturmodell der elektrischen rotierenden Maschine bereitgestellt, welches beispielsweise mit einem thermischen Simulator, insbesondere auf Basis der Finite-Elemente-Methode, berechnet und/oder durch Messungen empirisch ermittelt wird. Die Cloud ist insbesondere eine IT-Infrastruktur, in der beispielsweise Speicherplatz, Rechenleistung und Anwendungssoftware als Dienstleistung über das Internet bereitgestellt werden. Insbesondere wird aus der Cloud eine Menge, insbesondere eine Matrix, aus berechneten oder beispielsweise empirisch ermittelten Temperaturwerten an verschiedenen bekannten Positionen der elektrischen rotierenden Maschine heruntergeladen. Beispielsweise werden verschiedene Temperaturmatrizen für unterschiedliche Betriebszustände bereitgestellt. Mit Hilfe des in der Cloud bereitgestellten Temperaturmodells und den auf dem Maschinengehäuse gemessenen äußeren Temperaturmesswerten werden Temperaturen im Innenraum des Maschinengehäuses ermittelt. Beispielsweise werden anhand zumindest einer Temperaturmatrix aus der Cloud und den gemessenen äußeren Temperaturmesswerten die Temperaturen im Inneren des Maschinengehäuses berechnet. Alternativ wird aus der Cloud ein einfaches mathematisches Modell, welches beispielsweise aus einem komplexen physikalischen Modell approximiert wird, bereitgestellt, welches mit einem geringen Rechenaufwand in der Zentraleinheit weiterverarbeitet wird. Ein Mittel zur Ermittlung einer inneren Temperatur ist beispielsweise eine Recheneinheit, die insbesondere einen Mikroprozessor mit einem Speicher umfasst.

Insbesondere bei einer Verwendung zusätzlicher Sensoren zur Ermittlung eines Betriebspunktes der elektrischen rotierenden Maschine, werden die Temperaturen im Innenraum des Gehäuses mit ausreichender Genauigkeit ermittelt. Um die Verwendung eines möglichst leistungsfähigen und genauen Temperaturmodells zu ermöglichen, wird das Temperaturmodell in einer Cloud bereitgestellt, sodass komplexe Berechnungen zumindest teilweise in der Cloud stattfinden. Daher ist die Leistungsaufnahme der Überwachungsvorrichtung sehr gering. Deshalb genügt für die Versorgung der Überwachungsvorrichtung beispielsweise eine Batterie. Somit ist die Überwachungsvorrichtung ohne konstruktive Änderungen an der elektrischen rotierenden Maschine betreibbar. Durch die Bereitstellung eines leistungsfähigen Temperaturmodells in einer Cloud erfolgt die Überwachung, insbesondere der Temperatur, der elektrischen rotierenden Maschine sehr zuverlässig.

In einer bevorzugten Ausgestaltung wird die innere Temperatur in einer Zentraleinheit ermittelt, welche außerhalb des Maschinengehäuses angeordnet und mit der Cloud verbunden wird. Insbesondere umfassen die Mittel zur Ermittlung der inneren Temperatur in der Zentraleinheit zumindest einen Mikroprozessor und eine Kommunikationsvorrichtung zur Verbindung der Zentraleinheit mit der Cloud. Beispielsweise wird eine Menge an berechneten oder empirisch ermittelten Temperaturwerten an bekannten Positionen in der elektrischen rotierenden Maschine mit Hilfe der Kommunikationsvorrichtung aus der Cloud heruntergeladen und in der Zentraleinheit mit Hilfe des Mikroprozessors mit den gemessenen äußeren Temperaturwerten abgeglichen. Da aufwendige Rechenoperationen außerhalb der Zentraleinheit, insbesondere in der Cloud, durchgeführt werden, erfolgt die Ermittlung der inneren Temperatur in der Zentraleinheit schnell und energieeffizient.

In einer weiteren vorteilhaften Ausführungsform wird die Zentraleinheit drahtlos mit der Cloud verbunden. Insbesondere in einem industriellen Umfeld bietet eine drahtlose Verbindung mehr Flexibilität bei der Anbindung der Zentraleinheit an die Cloud, da beispielsweise keine Netzwerkdosen benötigt werden. Darüber hinaus lässt sich die Überwachungsvorrichtung durch eine drahtlose Anbindung leichter nachrüsten, da das Verlegen von Kabeln nicht erforderlich ist.

Besonders vorteilhaft wird die äußere Temperatur drahtlos an die Zentraleinheit übertragen. Eine drahtlose Übertragung der Sensordaten erfolgt beispielsweise über Bluetooth LE oder RFID. Durch eine drahtlose Übertragung der Sensordaten wird der eigentliche Betrieb, beispielsweise durch störende Kabel, nicht beeinflusst. Darüber hinaus sind, insbesondere passive, drahtlose Temperatursensoren kostengünstig und einfach an der Maschine anzubringen.

In einer weiteren vorteilhaften Ausführungsform wird die äußere Temperatur über ein, insbesondere passives, RFID-System an die Zentraleinheit übertragen. Beispielsweise umfasst die Zentraleinheit einen RFID-Reader, der mit, insbesondere passiven, RFID-Sensor-Tags kommuniziert, wobei ein RFID-Sensor-Tag zumindest einen Temperatursensor aufweist. Derartige RFID-Sensor-Tags sind kostengünstig, klein und leicht an der Maschine anzubringen.

Vorteilhaft wird die äußere Temperatur mittels einer Backscatter-Modulation übertragen. Bei einer Backscatter-Modulation wird ein von der Zentraleinheit gesendetes Kommunikationssignal, beispielswiese von einer Sensorvorrichtung, reflektiert und durch ein Umschalten einer Antennenimpedanz der Sensorvorrichtung moduliert. Insbesondere bei einer Kommunikation über Backscatter-Modulation sind die Sensorvorrichtungen passiv ausgeführt, wobei die Energie zum Umschalten der Antennenimpedanz aus einem elektromagnetischen Feld entnommen wird. Eine Backscatter-Modulation ist besonders energieeffizient und, insbesondere auf Seite der Sensorvorrichtung, leicht zu realisieren.

In einer bevorzugten Ausgestaltung wird die äußere Temperatur kontinuierlich erfasst. Durch eine kontinuierliche Erfassung der äußeren Temperatur werden insbesondere Temperaturänderungen schnell registriert. Daher können bei Bedarf schnell Gegenmaßnahmen eingeleitet werden.

In einer weiteren vorteilhaften Ausführungsform wird zumindest ein weiterer Betriebsparameter, insbesondere eine Drehzahl und/oder ein Schlupf, der elektrischen rotierenden Maschine ermittelt. Mittel zur Bestimmung eines weiteren Betriebsparameters sind beispielsweise zumindest ein Sensor zur Messung eines physikalischen Parameters der elektrischen rotierenden Maschine, und ein Mikroprozessor, der aus dem physikalischen Parameter einen Betriebsparameter ermittelt. Durch das Einbeziehen zusätzlicher Betriebsparameter werden die Genauigkeit und damit die Zuverlässigkeit der Überwachung erhöht.

Besonders vorteilhaft wird anhand des ermittelten Betriebsparameters ein Betriebspunkt für das Temperaturmodell bereitgestellt. Insbesondere bei einem parametrierbaren Temperaturmodell wird durch das Einbeziehen weiterer Betriebsparameter die Genauigkeit der Temperaturermittlung erhöht.

In einer weiteren vorteilhaften Ausführungsform wird der zumindest eine weitere Betriebsparameter in der Zentraleinheit ermittelt. Beispielsweise wird aus einem von einem Beschleunigungssensor gemessenen Schwingungsverhalten des Rotors eine Rotorfrequenz ermittelt, aus der die Drehzahl der elektrischen rotierenden Maschine berechnet wird. In der Zentraleinheit erfolgt die Berechnung schnell, energieeffizient und ist unmittelbar verfügbar.

Im Folgenden wird die Erfindung anhand der in den Figuren dargestellten Ausführungsbeispiele näher beschrieben und erläutert.

Es zeigen:
- FIG 1: einen Längsschnitt einer elektrischen rotierenden Maschine mit einer ersten Ausführungsform einer Überwachungsvorrichtung,
- FIG 2: einen Längsschnitt einer elektrischen rotierenden Maschine mit einer zweiten Ausführungsform einer Überwachungsvorrichtung und
- FIG 3: einen Längsschnitt einer elektrischen rotierenden Maschine mit einer dritten Ausführungsform einer Überwachungsvorrichtung.

Gleiche Bezugszeichen haben in den verschiedenen Figuren die gleiche Bedeutung.

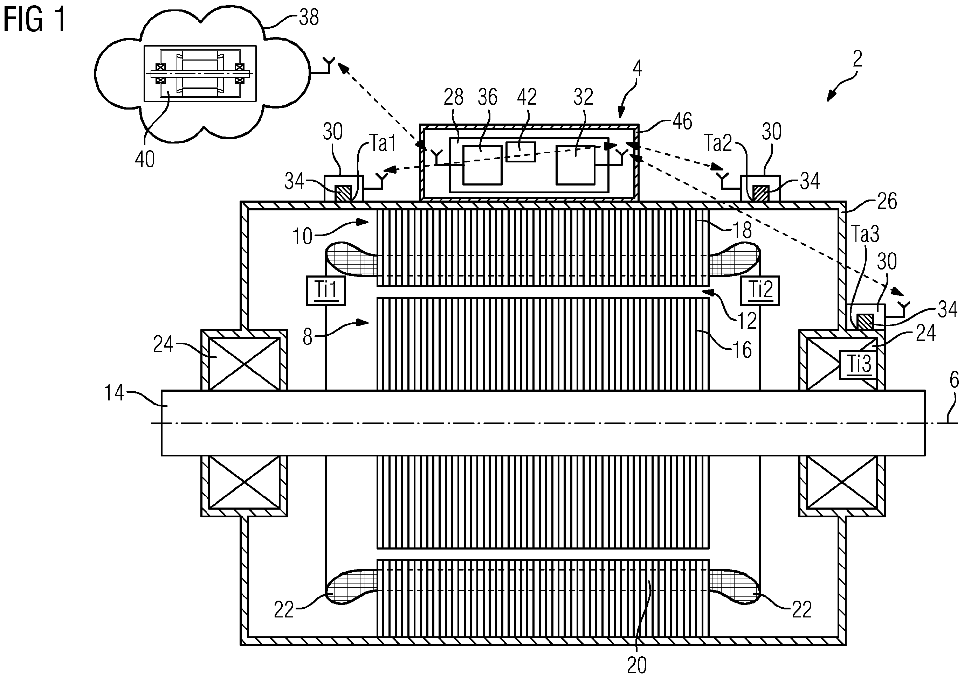

FIG 1 zeigt einen Längsschnitt einer elektrischen rotierenden Maschine 2 mit einer ersten Ausführungsform einer Überwachungsvorrichtung 4. Die elektrische rotierende Maschine 2 ist als Asynchronmaschine ausgeführt und weist einen um eine Rotationsachse 6 rotierbaren Rotor 8 und einen den Rotor 8 umgebenden Stator 10 auf, wobei sich zwischen dem Rotor 8 und dem Stator 10 ein Spalt 12, der insbesondere als Luftspalt ausgeführt ist, befindet. Die Rotationsachse 6 definiert eine Axialrichtung und eine Radialrichtung. Der Rotor 8 umfasst eine Welle 14 und ein Rotorblechpaket 16. Der Stator 10 umfasst ein Statorblechpaket 18 mit Statorwicklungen 20, wobei das Statorblechpaket 18 aus einer Vielzahl von geschichteten Elektroblechen aufgebaut ist. Die Statorwicklungen 20 verlaufen in Axialrichtung durch das Statorblechpaket 18 und bilden an den axialen Enden des Statorblechpakets 18 Wickelköpfe 22 aus. Die Welle 14 des Rotors 8 ist über Lager 24 gelagert.

Der Rotor 8 und der Stator 10 sind in einem geschlossenen Maschinengehäuse 26 untergebracht.

Die Überwachungsvorrichtung 4 umfasst eine Zentraleinheit 28 sowie mehrere dezentral angeordnete Sensorvorrichtungen 30, die, insbesondere kontinuierlich, äußere Temperaturen Ta1, Ta2, Ta3 auf einer äußeren Oberfläche des Maschinengehäuses 26 messen und drahtlos mit der Zentraleinheit 28 verbunden sind. Die Zentraleinheit 28 weist zur Herstellung der drahtlosen Verbindung mit den Sensorvorrichtungen 30 eine erste Kommunikationsvorrichtung 32 für den Nahbereich auf, die beispielsweise als RFID-Reader ausgeführt ist. Die Sensorvorrichtungen 30 empfangen das Kommunikationssignal der ersten Kommunikationsvorrichtung 32 und senden ein Sensorsignal zurück, welches einen von einem Temperatursensor 34 gemessenen Temperaturmesswert der äußeren Temperaturen Ta1, Ta2, Ta3 und einen Identifikationscode der jeweiligen Sensorvorrichtung 30 enthält. Der Temperatursensor 34 weist beispielsweise ein Platinelement, insbesondere ein PT100-Element, auf. Besonders energieeffizient ist eine Backscatter-Modulation, bei der das von der Kommunikationsvorrichtung 32 gesendete Kommunikationssignal reflektiert und durch ein Umschalten einer Antennenimpedanz der Sensorvorrichtung 30 moduliert wird. Insbesondere bei einer Kommunikation über Backscatter-Modulation sind die Sensorvorrichtungen 30 passiv, das heißt ohne Energiespeicher, ausgeführt. Die Energie zum Umschalten der Antennenimpedanz wird aus einem elektromagnetischen Feld, beispielsweise des Kommunikationssignals der ersten Kommunikationsvorrichtung 32, entnommen.

Neben der ersten Kommunikationsvorrichtung 32 weist die Zentraleinheit 28 eine zweite Kommunikationsvorrichtung 36 auf, über die die Zentraleinheit 28 drahtlos mit einer Cloud 38 verbunden ist. Die Verbindung erfolgt beispielsweise über WiFi, GSM und/oder eine andere Mobilfunkverbindung. In der Cloud 38 wird ein Temperaturmodell 40 der elektrischen rotierenden Maschine 2 bereitgestellt. Beispielsweise wird aus der Cloud 38 eine Matrix aus berechneten oder empirisch ermittelten Temperaturwerten an verschiedenen bekannten Positionen der elektrischen rotierenden Maschine heruntergeladen. Für unterschiedliche Betriebszustände, beispielsweise simulierte Fehlerfälle und/oder Lastzustände, werden verschiedene Temperaturmatrizen heruntergeladen. Alternativ wird aus der Cloud ein einfaches mathematisches Modell, welches beispielsweise aus einem komplexen physikalischen Modell approximiert wird, bereitgestellt, welches mit einem geringen Rechenaufwand in der Zentraleinheit 28 weiterverarbeitet wird.

Mit Hilfe der bereitgestellten Daten des Temperaturmodells 40 und den von den Sensorvorrichtungen 30 gemessenen und der ersten Kommunikationsvorrichtung 32 bereitgestellten äußeren Temperaturen Ta1, Ta2, Ta3 werden von einer Recheneinheit 42, die zumindest einen Prozessor und einen Speicher umfasst, innere Temperaturen Ti1, Ti2, Ti3 ermittelt. Die inneren Temperaturen Ti1, Ti2, Ti3 sind beispielsweise die Temperatur an einem Wickelkopf 22 oder in einem Lager 24. Durch das Einbeziehen des Temperaturmodells 40 wird eine zuverlässige nichtinvasive Ermittlung von Temperaturen innerhalb des Maschinengehäuses 26, insbesondere an schwer erreichbaren Stellen, ermöglicht. Durch eine Erhöhung der Anzahl der Sensorvorrichtungen 30 auf der äußeren Oberfläche des Maschinengehäuses 26 wird die Genauigkeit erhöht.

Der Ablauf der Temperaturermittlung wird von der Recheneinheit 42, welche in der Zentraleinheit 28 angeordnet ist, gesteuert. Die Zentraleinheit 28 ist von einem Gehäuse 46 umgeben, welches mit dem Maschinengehäuse 26 der elektrischen rotierenden Maschine 2, beispielsweise über eine Klemmverbindung und/oder eine Schraubverbindung verbunden ist. Die Sensorvorrichtungen 30 werden, beispielsweise mit einem thermisch leitfähigen Kleber, aufgeklebt, um eine optimale thermische Anbindung des Temperatursensors 34 an das Maschinengehäuse 26 zu gewährleisten. Die Zentraleinheit 28 sowie die Sensorvorrichtungen 30 sind nachrüstbar, da keine Modifikationen an der elektrischen rotierenden Maschine 2 vorgenommen werden.

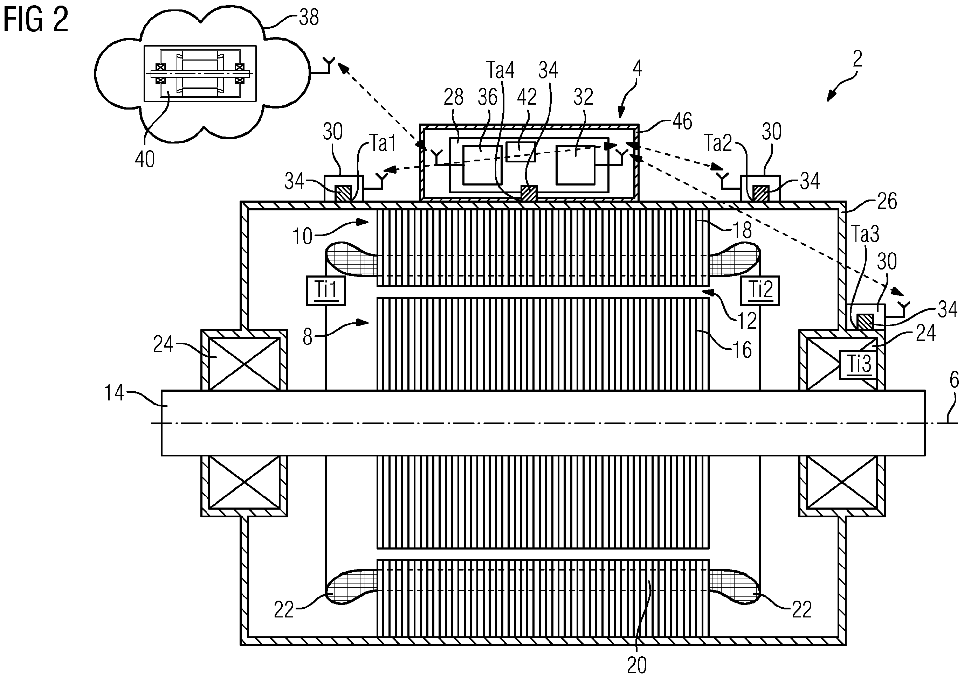

FIG 2 zeigt einen Längsschnitt einer elektrischen rotierenden Maschine 2 mit einer zweiten Ausführungsform einer Überwachungsvorrichtung 4. Im Gehäuse 46 der Zentraleinheit 28 befindet sich ein weiterer Temperatursensor 34, mit dem eine äußere Temperatur Ta4 auf der äußeren Oberfläche des Maschinengehäuses 26 gemessen wird. Mit Hilfe des Temperaturmodells 40 und den von der ersten Kommunikationsvorrichtung 32 bereitgestellten äußeren Temperaturen Ta1, Ta2, Ta3, Ta4 werden von der Recheneinheit 42 die innere Temperaturen Ti1, Ti2, Ti3 ermittelt. Die weitere Ausführung der elektrischen rotierenden Maschine 2 entspricht der Ausführung in FIG 1.

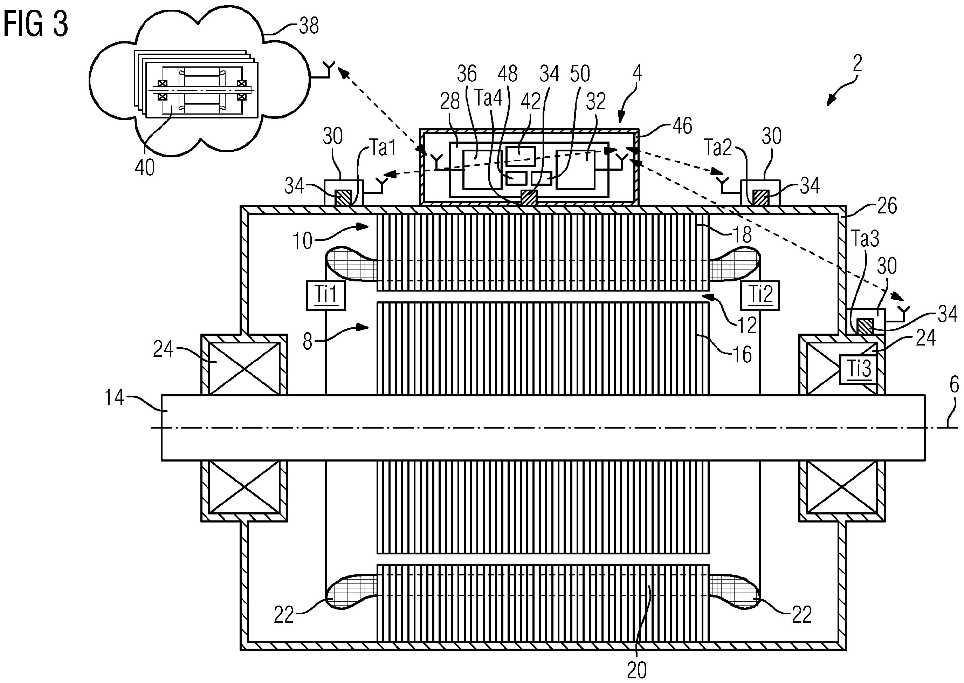

FIG 3 zeigt einen Längsschnitt einer elektrischen rotierenden Maschine 2 mit einer dritten Ausführungsform einer Überwachungsvorrichtung 4. Die Zentraleinheit 28 der Überwachungsvorrichtung 4 umfasst zusätzlich einen Beschleunigungssensor 48 und einen Magnetfeldsensor 50. Zusätzlich oder alternativ wird zum Beschleunigungssensor 48 ein Vibrationssensor verwendet. Mit Hilfe des Magnetfeldsensors 50 wird ein äußeres Streufeld des Stators 10 gemessen, aus dessen, insbesondere periodischer, zeitlicher Änderung eine Statorfrequenz ermittelt wird. Mit dem Beschleunigungssensor 48 wird ein Schwingungsverhalten des Rotors 8 erfasst. Das vom Beschleunigungssensor 48 erfasste Schwingungssignal wird, beispielsweise mit Hilfe einer Fast Fourier Transformation, kurz FFT, in der Recheneinheit 42 in den Frequenzbereich transformiert. Aus dem resultierenden Frequenzspektrum des Schwingungssignals wird die mechanische Rotorfrequenz ermittelt. Eine Schlupffrequenz der Asynchronmaschine wird aus der mechanischen Rotorfrequenz und der Statorfrequenz berechnet. Aus der Schlupffrequenz lassen sich weitere Betriebsparameter der elektrischen rotierenden Maschine 2, beispielsweise empirisch oder mit Hilfe einer Berechnung, ermitteln.

Anhand der ermittelten Betriebsparameter, insbesondere der Drehzahl und/oder dem Schlupf der elektrischen rotierenden Maschine 2 wird ein Betriebspunkt für das Temperaturmodell 40 bereitgestellt. Das Temperaturmodell 40 ist hinsichtlich der Betriebsparameter parametrierbar, sodass für die jeweiligen Betriebspunkte Simulationsergebnisse bereitgestellt werden. Mit Hilfe des Temperaturmodells 40 für den jeweiligen Betriebspunkt und den von der ersten Kommunikationsvorrichtung 32 bereitgestellten äußeren Temperaturen Ta1, Ta2, Ta3, Ta4 werden von der Recheneinheit 42 die inneren Temperaturen Ti1, Ti2, Ti3 ermittelt. Die weitere Ausführung der elektrischen rotierenden Maschine 2 entspricht der Ausführung in FIG 2.

Zusammenfassend betrifft die Erfindung ein Verfahren zum Überwachen des Betriebes einer elektrischen rotierenden Maschine 2 mit einem Rotor 8, einem Stator 10 und einem Maschinengehäuse 26, in dem der Rotor 8 und der Stator 10 aufgenommen sind. Um ohne konstruktive Änderungen im Vergleich zum Stand der Technik eine höhere Zuverlässigkeit zu erreichen, wird vorgeschlagen, dass auf einer äußeren Oberfläche des Maschinengehäuses 26 zumindest eine äußere Temperatur Ta1, Ta2, Ta3, Ta4 an zumindest einer bekannten Position erfasst wird, wobei aus der erfassten äußeren Temperatur Ta1, Ta2, Ta3, Ta4 mittels eines in einer Cloud 38 bereitgestellten Temperaturmodells 40 zumindest eine innere Temperatur Ti1, Ti2, Ti3 ermittelt wird.

## Patentansprüche

1. Verfahren zum Überwachen des Betriebes einer elektrischen rotierenden Maschine (2) mit einem Rotor (8), einem Stator (10) und einem Maschinengehäuse (26), in dem der Rotor (8) und der Stator (10) aufgenommen sind,
wobei auf einer äußeren Oberfläche des Maschinengehäuses (26) zumindest eine äußere Temperatur (Ta1, Ta2, Ta3, Ta4) an zumindest einer bekannten Position erfasst wird,
wobei aus der erfassten äußeren Temperatur (Ta1, Ta2, Ta3, Ta4) mittels eines in einer Cloud (38) bereitgestellten Temperaturmodells (40) zumindest eine innere Temperatur (Ti1, Ti2, Ti3) ermittelt wird.

2. Verfahren nach Anspruch 1,
wobei die innere Temperatur (Ti1,Ti2, Ti3) in einer Zentraleinheit (28) ermittelt wird,
welche außerhalb des Maschinengehäuses (26) angeordnet und mit der Cloud (38) verbunden wird.

3. Verfahren nach Anspruch 2,
wobei die Zentraleinheit (28) drahtlos mit der Cloud (38) verbunden wird.

4. Verfahren nach einem der Ansprüche 2 oder 3,
wobei die äußere Temperatur (Ta1, Ta2, Ta3, Ta4) drahtlos an die Zentraleinheit (28) übertragen wird.

5. Verfahren nach einem der Ansprüche 2 bis 4,
wobei die äußere Temperatur (Ta1, Ta2, Ta3, Ta4) über ein, insbesondere passives, RFID-System an die Zentraleinheit (28) übertragen wird.

6. Verfahren nach einem der Ansprüche 4 oder 5,
wobei die äußere Temperatur (Ta1, Ta2, Ta3, Ta4) mittels einer Backscatter-Modulation übertragen wird.

7. Verfahren nach einem der vorherigen Ansprüche,
wobei die äußere Temperatur (Ta1, Ta2, Ta3, Ta4) kontinuierlich erfasst wird.

8. Verfahren nach einem der vorherigen Ansprüche,
wobei zumindest ein weiterer Betriebsparameter, insbesondere eine Drehzahl und/oder ein Schlupf, der elektrischen rotierenden Maschine (2) ermittelt wird,
wobei anhand des ermittelten Betriebsparameters ein Betriebspunkt für das Temperaturmodell (40) bereitgestellt wird.

9. Verfahren nach Anspruch 8,
wobei der zumindest eine weitere Betriebsparameter in der Zentraleinheit (28) ermittelt wird.

10. Überwachungsvorrichtung (4) mit mindestens einer Sensorvorrichtung (30) und einer Recheneinheit (42) in einer Zentraleinheit (28) zur Durchführung eines Verfahrens nach einem der Ansprüche 1 bis 9.

11. Computerprogramm zur Durchführung eines Verfahrens nach einem der Ansprüche 1 bis 9 bei Ablauf in einer Recheneinheit (42) einer Überwachungsvorrichtung (4) nach Anspruch 10.

12. Computerprogrammprodukt mit einem Computerprogramm nach Anspruch 11.

13. Elektrische rotierende Maschine (2) mit einem Rotor (8), einem Stator (10) und einem Maschinengehäuse (26), in dem der Rotor (8) und der Stator (10) aufgenommen sind,
wobei auf einer äußeren Oberfläche des Maschinengehäuses (26) Mittel zur Erfassung zumindest einer äußeren Temperatur (Ta1, Ta2, Ta3, Ta4) an zumindest einer bekannten Position angeordnet sind,
wobei die elektrische rotierende Maschine (2) Mittel zur Ermittlung zumindest einer inneren Temperatur (Ti1,Ti2, Ti3) aus der äußeren Temperatur (Ta1, Ta2, Ta3, Ta4) mit Hilfe eines in einer Cloud (38) bereitgestellten Temperaturmodells (40) aufweist.

14. Elektrische rotierende Maschine (2) nach Anspruch 13,
wobei die Mittel zur Bestimmung der inneren Temperatur (Ti1, Ti2, Ti3) in einer Zentraleinheit (28) angeordnet sind, welche außerhalb des Maschinengehäuses (26) angeordnet und mit der Cloud (38) verbunden ist.

15. Elektrische rotierende Maschine (2) nach Anspruch 14,
wobei die Zentraleinheit (28) drahtlos mit der Cloud (38) verbunden ist.

16. Elektrische rotierende Maschine (2) nach einem der Ansprüche 13 bis 15,
wobei die Mittel zur Erfassung der äußeren Temperatur (Ta1, Ta2, Ta3, Ta4) eine Sensorvorrichtung (30) umfassen.

17. Elektrische rotierende Maschine (2) nach Anspruch 16,
wobei die Sensorvorrichtung (30) drahtlos mit der Zentraleinheit (28) verbunden ist.

18. Elektrische rotierende Maschine (2) nach einem der Ansprüche 16 oder 17,
wobei die Sensorvorrichtung (30) über ein, insbesondere passives, RFID-System mit der Zentraleinheit (28) verbunden ist.

19. Elektrische rotierende Maschine (2) nach einem der Ansprüche 16 bis 18,
wobei die Sensorvorrichtung (30) Mittel zur Durchführung einer Backscatter-Modulation aufweist.

20. Elektrische rotierende Maschine (2) nach einem der Ansprüche 13 bis 19,
welche Mittel zur Bestimmung zumindest eines weiteren Betriebsparameters, insbesondere einer Drehzahl und/oder eines Schlupfs, der elektrischen rotierenden Maschine (2), zur Ermittlung eines Betriebspunktes für das Temperaturmodell (40) aufweist.

21. Elektrische rotierende Maschine (2) nach Anspruch 20,
wobei die Mittel zur Bestimmung zumindest eines weiteren Betriebsparameters einen Beschleunigungssensor (48) und/oder einen Magnetfeldsensor (50) umfassen.

22. Elektrische rotierende Maschine (2) nach einem der Ansprüche 20 oder 21,
wobei die Mittel zur Bestimmung des weiteren Betriebsparameters in der Zentraleinheit (28) angeordnet sind.
